Europäisches Patentamt

European Patent Office

Office européen des brevets

(11) Publication number: **0 494 593 A1**

# EUROPEAN PATENT APPLICATION

(21) Application number: **92100013.9**

(22) Date of filing: **02.01.92**

(51) Int. Cl.5: **B26D  3/16**, B23D 33/00, B05B 11/00

(30) Priority: **07.01.91 IT 9100012**

(43) Date of publication of application:
**15.07.92 Bulletin  92/29**

(84) Designated Contracting States:
**AT BE CH DE DK ES FR GB GR IT LI LU MC NL PT SE**

(71) Applicant: **TES S.p.A. TECNOLOGIE E SISTEMI MICROROBOTICA**
**Via Salara, Zona Industriale Sambuceto**
**I-66020 San Giovanni Teatino, CH(IT)**

(72) Inventor: **Mancini, Carlo**
**Via Sant'Anatolio, 26**
**I-65020 Cugnoli, PE(IT)**

Inventor: **D'Ovidio, Renato**
**Via Torre Marino, 149**
**I-66034 Lanciano, CH(IT)**
Inventor: **Lanzilli, Andrea**
**Via Da Denominare 28, 7**
**I-64029 Silvi Marina, TE(IT)**
Inventor: **Salerni, Roberto**
**Via Osento, 19**
**I-65100 Pescara(IT)**

(74) Representative: **Giambrocono, Alfonso, Dr. Ing. et al**
**Ing. A. Giambrocono & C. S.r.l. Via Rosolino Pilo 19/B**
**I-20129 Milano(IT)**

(54) **Device for inserting a tube piece into fluid dispensing pumps and then cutting it to length.**

(57) The device comprises a reciprocating member (3) and, opposing it and connected to it only by return springs (5), a mobile unit consisting of a tube cutting (12) and a tube gripping (14) element between which a compression spring (15) is interposed. During its travel towards the mobile unit the reciprocating member (3) acts on the mobile unit, to move it until the cutting element (12) halts against a stop. The gripping element (14) continues to move for a short distance towards the cutting element (12), compressing the spring (15) interposed between them, and causing the free end of the tube to emerge and be inserted into the respective seat in a pump retained by a support member. The reciprocating member (3) and mobile unit then reverse their movement until a lower travel stop is reached, at which the cutting element (12) cuts off the tube piece already inserted into the pump. The mobile unit is rigid with a graduated rod on which a ring nut (11) is screwed to form a vernier which determines the length of the cut tube piece by the ring nut (11) halting against a fixed stop (2) defining said lower travel stop.

Fig. 1

This invention relates to a device for inserting a tube piece into fluid dispensing pumps of the type operable by one finger, for dispensing creamy or pasty substances or atomized liquids, and then cutting it to length.

Dispensing pumps or devices operable by one finger are known to be used for dispensing pasty or creamy substances (such as liquid soaps or creams of any type, including for food use) or liquids.

These pumps are applied to the mouth of containers or bottles of the most varied dimensions. In that face which faces the interior of the container, such pumps comprise a seat into which one end of a tube (commonly known as the dip tube) is forcibly inserted, its other end being open to form the aperture for the passage of the fluid from the container to the pump. It is apparent that as the containers are of different dimensions, the tube pieces applied to the pumps must be of correspondingly different lengths.

The free end of the tube is inserted into its pump seat by automatic devices which also automatically cut the tube to the desired length.

These devices comprise a pump support member and a mechanically operated mobile unit which grips the tube in proximity to its free end and inserts it into the respective seat in the pump, after which the mobile unit is withdrawn from the pump support member by the correct distance, at which a knife or the like cuts the tube to the desired length. When this has been accomplished, the pump support member removes the pump with the tube piece applied to it, a new pump is put in position and the mobile unit grips the tube in proximity to its free end at which the said cut was made, and moves the tube towards the pump to repeat the described cycle.

In known devices the mobile tube gripping unit is connected by connecting rods, cranks and the like directly to the drive motor. The length of travel involved in the withdrawal of the mobile unit from the pump support member is related to the length of the tube piece applied to the pump, hence when the length of the tube pieces applied to the pumps needs to be changed, the length of the travel stroke of the mobile unit must be varied, ie the connecting rods, cranks or the like have to be replaced by others of different length. This replacement obviously requires a certain time, and in addition it is very difficult to cut a tube piece to all desired lengths, especially very short lengths.

The main object of the present invention is to provide a device of very simple structure, which enables tube pieces to be applied to pumps and cut to any desired length with considerable accuracy, using very simple and rapid operations.

This and further objects are attained by a device comprising a fixed structure, a mobile unit including a knife-carrying element for cutting and an element for gripping the tube, and a reciprocating member acting on said unit to move it with reciprocating motion between a lower travel stop and an upper travel stop, characterised in that said knife-carrying element is rigid with one end of an elongate rod movable within said fixed structure and of which at least one portion, in proximity to its other end, comprises a thread on which a ring nut engages, the knife-carrying element and said ring nut abutting against the fixed structure to determine said upper and lower travel stops respectively, the tube gripping element being connected to but movable relative to the knife-carrying element, said reciprocating member being independent of said gripping element, the reciprocating member undergoing longer travel strokes than this latter.

Preferably, on said elongate rod there is provided a graduated scale, along which said ring nut is positioned to thus act as a vernier to micrometrically and precisely determine the length of the cut tube piece applied to the pump.

Again preferably, said gripping element and said reciprocating member are connected together by at least one spring which is under tension when the reciprocating member is distant from the gripping element; whereas between the tube gripping element and the knife-carrying element there is positioned at least one compression spring acting between said elements to keep them apart.

The structure and characteristics of the device according to the present invention will be more apparent from the description of a preferred embodiment thereof given hereinafter by way of non-limiting example with reference to the accompanying drawings in which:

Figure 1 is a partial front elevational view of the device;

Figures 2 to 6 are schematic representations of the device in five different working positions during an operating cycle;

Figures 7 to 10 show to an enlarged scale the tube gripping and cutting elements in different positions relative to the reciprocating drive member;

Figure 11 shows a detail of the tube gripper.

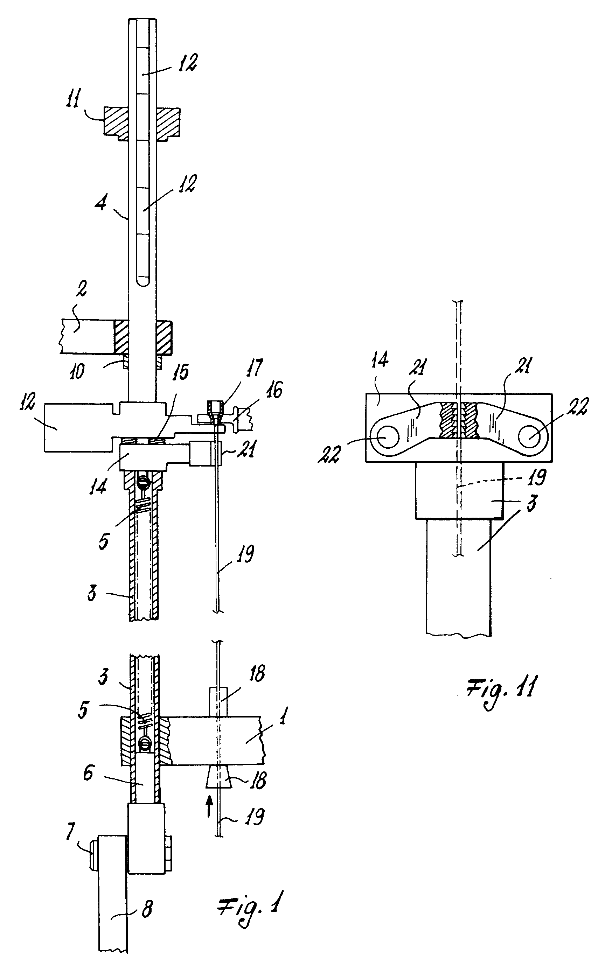

With reference firstly to Figure 1, this shows a lower portion 1 and an upper portion 2 of a fixed structure defining guides within which a reciprocating member 3 and an aligned elongate rod 4 are retained and are longitudinally movable. The upper part of the member 3 is internally hollow and houses the lower portion of a return spring 5 fixed to a hook 6 rigid with the member 3 in proximity to its lower end. The lower end of the member 3 carries a pivot 7 on which the upper end of a connecting rod 8 is pivoted, its lower end being connected (see Figures 2 to 6) to one end of a crank, the other end of which is rigid with a rotating shaft rotated continuously by a motor, not shown.

As is apparent, the member 3 undergoes continuous rectilinear reciprocating motion of constant length within the structure 1.

The rod 4 (aligned with the member 3 and also moving with rectilinear motion within the guide formed in the upper fixed structure 2) has its outer surface threaded (the thread not being shown on the drawings for simplicity), and on which there are screwed a stop nut 10 (positioned below the structure 2) and a ring nut 11, positioned above the structure 2. On that portion of the rod 4 along which the ring nut 11 operates there is a graduated micrometric scale 12 which together with the ring nut 11 forms a vernier.

When the rod 4 is raised, the nut 10 abuts against the fixed structure 2 to thus define the upper end-of-travel position of the rod and the parts associated with it; when the rod is lowered the ring nut 11 abuts against the structure 2 to define the lower end-of-travel position of the rod.

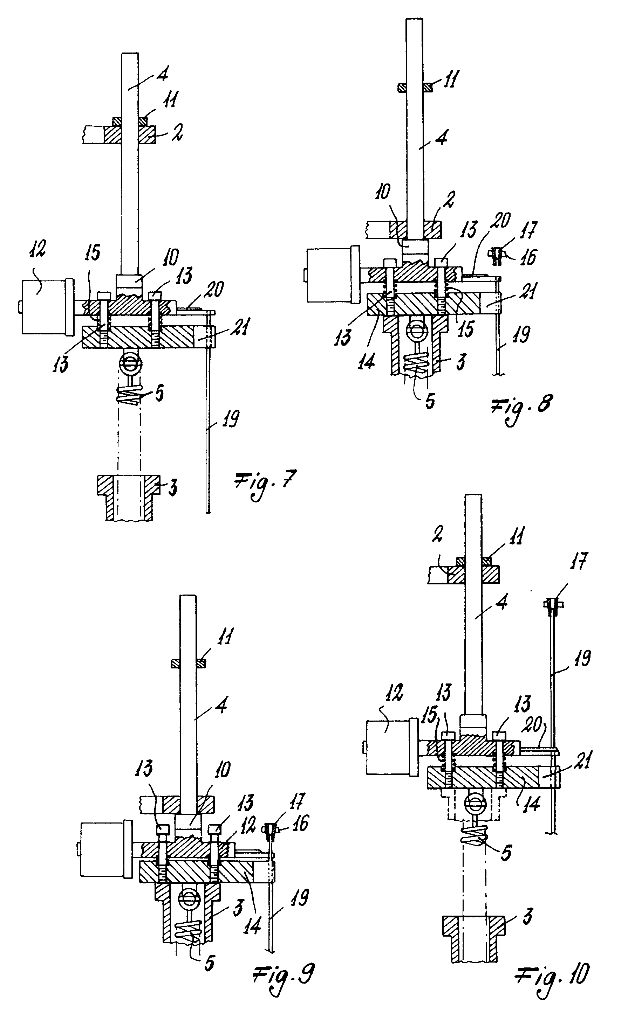

A knife-carrying element 12 rigid with the lower end of the rod 4 carries by means of bolts 13 freely movable within holes provided in the element 12 (see Figures 7 to 10) an element 14 carrying a gripper for gripping a tube described hereinafter. Thrust springs 15 are provided between the elements 12 and 14 to urge them apart.

The lower surface of the gripping element 14 is provided with a hook to which the upper end of the said spring 5 is fixed.

It should be noted that whereas in Figure 1 the nut 10 is shown screwed onto the rod 4 into a position well above the knife-carrying element 12, in Figures 7 to 10 it is shown adhering to the upper surface of the element 12 for simplicity of drawing. As the position of the nut 10 on the rod 4 determines the upper travel limit of the mobile unit formed by the elements 12 and 14, it is apparent that this nut can be arranged in the most suitable position chosen at the commencement of operation of the device.

Figure 1 shows the end portion of a member 16 located immediately above the position which the element 12 occupies when in its upper end-of-travel position, the member 16 supporting a pump the lower end 17 of which, shown on the drawings, comprises a seat for receiving the free end of a dip tube. The member 16 is movable and is of well known traditional structure and operation, and will not be further described.

Finally, it should be noted that rigid with the fixed structure 1 there is a funnel element 18 through which a tube 19 is fed from a tube feed reel.

It will be assumed that both the unit comprising the elements 12 and 14 and the reciprocating member 3 are initially in their lower end-of-travel position. This situation is represented schematically in Figure 2 and a detail is shown to an enlarged scale in Figure 7 (in which for simplicity the nut 10 is shown screwed down to adhere to the element 12). Under these conditions the crank 9 is facing downwards, with the pivot 7 at the lowest point of is continuous rotary path, and the connecting rod 6 is in its lowest position, as is the reciprocating member 3. The unit comprising the elements 12 and 14 and their support rod 4 are also at their lower end-of-travel position, determined by the ring nut 11 abutting against the upper portion 2 of the fixed structure. It can be seen that the spring 5 is under tension and the springs 15 (shown schematically in Figures 2 to 6) keep the element 14 away from the element 12.

If the crank 9 now rotates anticlockwise relative to Figures 2 to 6 from the position shown in Figure 2, the crank and connecting rod cause the reciprocating member 3 to rise so that it initially makes contact with the element 14 and then pushes this element upwards together with the element 12 and rod 4 (the springs 15 keeping the elements 12 and 14 apart, as the springs 15 have a relatively high compression resistance) until the nut 10 (Figure 8) hits against the portion 2 of the fixed structure, to determine the upper end-of-travel position of the rod 4 and of the knife-carrying element 12 rigid with it (Figure 3).

The element 14 carries a gripper which (as explained hereinafter) retains and drags a tube, the free end of which is in line with a cutting blade or knife carried by the element 12, hence when in the position shown in Figures 3 and 8 the gripping element positions the upper free end of the tube 19 in correspondence with and immediately below the seat provided in the lower part of the pump 17, which is held in position by the member 16.

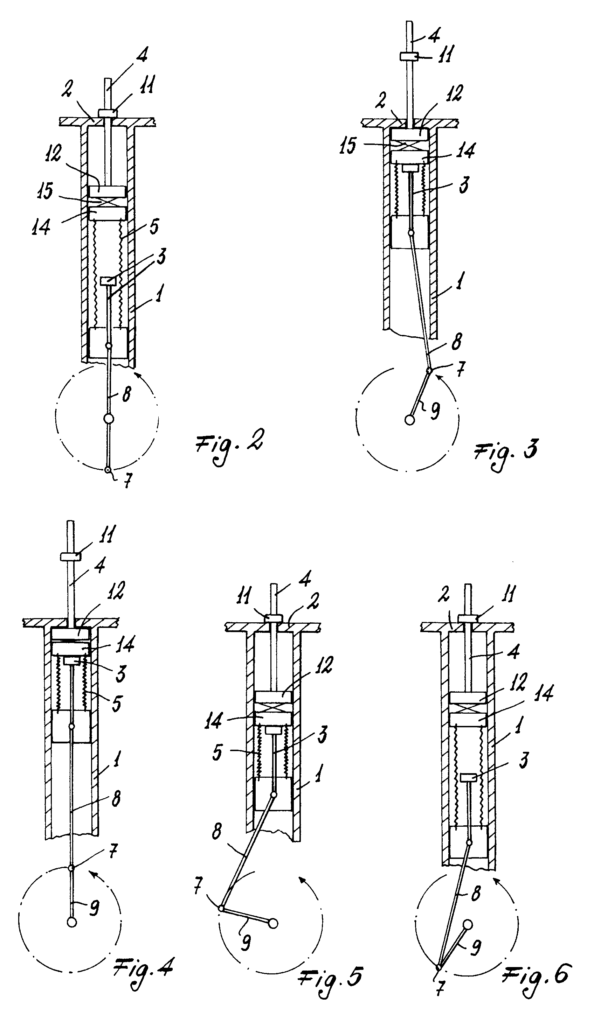

From the position shown in Figure 3, the crank 9 continues its anticlockwise rotation until it reaches the position shown in Figure 4 in which the reciprocating member 3 is at its maximum height, having raised the gripping element 14 to compress the springs 15 as the knife-carrying element 12 can no longer move upwards. During this latter stage of upward movement (Figure 9), the gripping element 14 further raises the tube 19 to forcibly insert its free end into the seat in the pump 17.

Starting from this point, with continuing anticlockwise rotation of the crank 9 the member 3 moves downwards together with the gripping element 14 which rests on it, the knife-carrying element 12 and the rod 4, until the ring nut 11 stops against the upper portion 2 of the fixed structure (Figure 5). It should be noted that during this lowering stage the springs 15 keep the elements 12 and 14 apart and the grippers carried by the element 14 slide along in contact with the tube 19, which is retained at its top by the pump 17 which is still at rest in its initial position.

With continuing rotation of the crank 9, the member 3 separates and withdraws from the gripping element 14 and the spring 5 stretches, until when the crank reaches a point close to its bottom dead centre (shown schematically in Figure 2), ie the position shown in Figure 6, the crank acts on a switch (not shown for simplicity) which by means of a normal electrical circuit feeds current to a member (none of these elements are shown as they are obvious to an expert of the art) which operates the blade or knife 20 carried by the element 12, to cut the tube 19 (Figure 10). In this manner a tube piece of length depending essentially on the position of the ring nut 11 on the rod 4 remains rigid with the pump 17. As soon as the tube piece has been cut off, the member 16 removes the pump together with the tube piece applied to it, and a new pump without tube is automatically positioned at the point previously occupied by the other pump. The operation of the member 16 which holds the pump is not described as it is well known and of common use in those devices which perform a similar function to the device of the present invention.

After the pump has been removed together with the tube piece applied to it, the device assumes the appearance shown in Figure 7.

As stated, the element 14 comprises a gripper which grips, retains and drags the tube 19 only when said element moves upwards (with respect to the figures), and leaves it free during the descent of said element.

This gripper is represented schematically in Figure 11 which shows it in frontal view, ie viewing the device from right to left in Figures 7 to 10.

The gripper consists of two jaws 21 freely rotatable on respective pivots 22 carried by the element 14, a sawtoothed recess being provided in the opposing surfaces of the two jaws, as shown in Figure 11.

It is apparent that when the element 14 moves upwards, the two jaws 21 of the gripper rest against the surface of the tube 19 to retain it securely and drag it upwards.

In contrast, when the element 14 moves downwards and the tube is retained by the said pump 17, the two jaws rotate slightly about their pivots and open, to hence slide along the outer surface of the tube.

The determining characteristic of the described device is that the moving member 3 is not rigidly secured to the gripping element 14, so that any predetermined constant travel stroke can be set for the member 3, and the unit comprising the elements 12 and 14 and rod 4 can have a travel stroke of any length less than that of the member 3. This length can be varied with great ease and precision by the ring nut 11 which by moving along the graduated scale on the rod 12 represents an actual vernier, enabling the length of the travel stroke of the unit comprising the knife-carrying element and gripping element to be adjusted micrometrically, so enabling the length of the tube piece applied to the pump to be varied easily and exactly (it is not necessary to adjust the length of the connecting rod and crank of the device, as is instead necessary with known devices).

With the described device the tube piece projecting from the pump can be cut to a very short length, of down to about 2 mm.

## Claims

1. A device for inserting a tube piece into fluid dispensing pumps and then cutting it to length, comprising a fixed structure, a mobile unit including a knife-carrying element for cutting and an element for gripping the tube, and a reciprocating member acting on said unit to move it with reciprocating motion between a lower travel stop and an upper travel stop, characterised in that said knife-carrying element is rigid with one end of an elongate rod movable within said fixed structure and of which at least one portion, in proximity to its other end, comprises a thread on which a ring nut engages, the knife-carrying element and said ring nut abutting against the fixed structure to determine said upper and lower travel stops respectively, the tube gripping element being connected to but movable relative to the knife-carrying element, said reciprocating member being independent of said gripping element, the reciprocating member undergoing longer travel strokes than this latter.

2. A device as claimed in claim 1, characterised in that on said elongate rod there is provided a graduated scale, along which said ring nut is positioned.

3. A device as claimed in claims 1 and 2, characterised in that said gripping element and said reciprocating member are connected together by at least one spring which is under tension when the reciprocating member is distant from the gripping element.

4. A device as claimed in claims 1 to 3, characterised in that between the tube gripping element and the knife-carrying element there is positioned at least one compression spring acting between said elements to keep them apart.

EP 0 494 593 A1

Fig. 11

Fig. 1

6

Fig. 2

Fig. 3

Fig. 4

Fig. 5

Fig. 6

Fig. 7

Fig. 8

Fig. 9

Fig. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 533 477 (SAE)  ----- | | B26D3/16<br>B23D33/00<br>B05B11/00 |
| | | | TECHNICAL FIELDS SEARCHED (Int. Cl.5) |
| | | | B26D<br>B23D<br>B05B |

The present search report has been drawn up for all claims

| Place of search | Date of completion of the search | Examiner |
|---|---|---|
| THE HAGUE | 13 APRIL 1992 | JUGUET J.M. |

EPO FORM 1503 03.82 (P0401)